# EUROPEAN PATENT APPLICATION

(11) **EP 4 819 068 A1**
(43) Date of publication of application: **07.10.2026**
(21) Application number: 26168514.3
(22) Date of filing: 27.03.2026
(51) Int. Cl.: G06V 10/82, G06V 20/58

(54) **ELECTRONIC DEVICE, METHOD, AND NON-TRANSITORY COMPUTER READABLE STORAGE MEDIUM FOR PREDICTING TRAJECTORY OF EXTERNAL OBJECT**

(30) Priority: 31.03.2025 KR 20250041692; 24.03.2026 KR 20260053306
(71) Applicant: Thinkware Corporation, Seongnam-si, Gyeonggi-do 13493 (KR)
(72) Inventor: PARK, Dongwoo, 13493 Seongnam-si (KR); PARK, Yosep, 13493 Seongnam-si (KR); PARK, Jisu, 13493 Seongnam-si (KR); LEE, Suhyeong, 13493 Seongnam-si (KR)
(74) Representative: Kim Kang, Jae Hee

(57) **Abstract**

An electronic device for controlling a vehicle includes a camera, and at least one processor. The at least one processor is configured to obtain, via the camera, a video of a surrounding environment of the vehicle. The at least one processor is configured to determine a predicted trajectory for an external object included in the surrounding environment using the video. The at least one processor is configured to obtain a collision probability between the external object and the vehicle by inputting the video and the predicted trajectory into a trained model. The at least one processor is configured to generate collision notification information for the external object based on the collision probability.

## Description

### [Technical Field]

The present disclosure relates to an electronic device, a method, and a non-transitory computer readable storage medium for predicting a trajectory of an external object.

### [Background Art]

An electronic device may be mounted on a vehicle. The electronic device may perform a function of an advanced driver assistance system (ADAS). The electronic device may prevent a traffic accident by using the advanced driver assistance system. The advanced driver assistance system is being studied for convenience and safety of a driver.

The above-described information may be provided as a related art for the purpose of helping understanding of the present disclosure. No argument or decision is made as to whether any of the above description may be applied as a prior art related to the present disclosure.

### [Detailed Description]

### [Technical Solution]

An electronic device for controlling a vehicle is provided. The electronic device may comprise a camera. The electronic device may comprise at least one processor. The at least one processor may be configured to obtain, via the camera, a video of a surrounding environment of the vehicle. The at least one processor may be configured to determine a predicted trajectory for an external object included in the surrounding environment using the video. The at least one processor may be configured to obtain a collision probability between the external object and the vehicle by inputting the video and the predicted trajectory into a trained model. The at least one processor may be configured to generate collision notification information for the external object based on the collision probability.

A method executed by an electronic device for controlling a vehicle with a camera is provided. The method may comprise obtaining, via the camera, a video of a surrounding environment of the vehicle. The method may comprise determining a predicted trajectory for an external object included in the surrounding environment using the video. The method may comprise obtaining a collision probability between the external object and the vehicle by inputting the video and the predicted trajectory into a trained model. The method may comprise generating collision notification information for the external object based on the collision probability.

A non-transitory computer readable storage medium is provided. The non-transitory computer readable storage medium may store one or more programs. The one or more programs may comprise instructions to, when executed by an electronic device for controlling a vehicle with a camera, cause the electronic device to obtain, via the camera, a video of a surrounding environment of the vehicle. The one or more programs may comprise instructions to, when executed by the electronic device, cause the electronic device to determine a predicted trajectory for an external object included in the surrounding environment using the video. The one or more programs may comprise instructions to, when executed by the electronic device, cause the electronic device to obtain a collision probability between the external object and the vehicle by inputting the video and the predicted trajectory into a trained model. The one or more programs may comprise instructions to, when executed by the electronic device, cause the electronic device to generate collision notification information for the external object based on the collision probability.

### [Brief Description of the Drawings]

FIG. 1 is a schematic view of an electronic device according to an embodiment.
FIG. 2 illustrates an external object located in front of a vehicle.
FIG. 3 is an example of a block diagram of an electronic device for obtaining a collision probability by using a video.
FIG. 4 is a flowchart representing an operation of an electronic device for generating collision notification information.
FIG. 5 is an example of a frame image included in a video obtained through a camera.
FIG. 6 is an example of a block diagram of an electronic device for obtaining a collision probability by using a predicted trajectory.
FIG. 7 illustrates a predicted trajectory for an external object.
FIG. 8 illustrates an example of collision notification information provided to a user.
FIG. 9 illustrates an example of a block diagram representing an autonomous driving system of a vehicle according to an embodiment.
FIG. 10 and FIG. 11 illustrate an example of a block diagram illustrating an autonomous driving moving object according to an embodiment.
FIG. 12 illustrates an example of a gateway related to a user device according to various embodiments.
FIG. 13 is a diagram for describing an operation of an electronic device for training a neural network based on a set of training data according to an embodiment.
FIG. 14 is a block diagram of an electronic device according to an embodiment.

### [Mode(s) for Carrying Out the Invention]

Specific structural or functional descriptions of embodiments according to a concept of the present invention disclosed in the present specification are exemplified only for a purpose for describing embodiments according to the concept of the present invention, and embodiments according to the concept of the present invention may be implemented in various forms and are not limited to embodiments described in the present specification.

Since embodiments according to the concept of the present invention may apply various changes and have various forms, embodiments will be exemplified in the drawings and described in detail in the present specification. However, this is not intended to limit embodiments according to the concept of the present invention to specific disclosure forms, and includes a modification, an equivalent, or a substitute included in a spirit and technical scope of the present invention.

Although terms such as first or second may be used to describe various components, the components should not be limited by the terms. The terms are used for a purpose of distinguishing one component from another component, and for example, without departing from a scope of rights according to the concept of the present invention, a first component may be referred to as a second component and similarly the second component may also be referred to as the first component.

When a component is mentioned to be "connected" or "accessed" to another component, it should be understood that it may be directly connected or accessed to the another component, but another component may exist in a middle. On the other hand, when a component is mentioned to be "directly connected" or "directly connected" to another component, it should be understood that no other component exists in the middle. Expressions that describe a relationship between components, such as "between" and "directly between" or "directly adjacent to", and the like, should be interpreted in the same manner.

A term used in the present specification is used only to describe specific embodiments and is not intended to limit the present invention. A singular expression includes a plural expression unless context clearly indicates otherwise. In the present specification, a term such as "include" or "have", and the like are intended to be designated as existence of a described feature, number, step, operation, component, part, or combination thereof and should be understood not to pre-exclude a possibility of the existence or addition of one or more other features, number, step, operation, component, part, or combination thereof.

Unless otherwise defined, all terms used herein, including technical or scientific terms, have the same meaning as commonly understood by a person of ordinary skill in the art to which the present invention belongs. Terms defined in commonly used dictionaries should be interpreted as having a meaning consistent with the meaning of context of relevant technology, and are not interpreted in an ideal or overly formal sense unless explicitly defined in the present specification.

Hereinafter, embodiments will be described in detail with reference to the accompanying drawings. However, a scope of a patent application is not limited or restricted by these embodiments. The same reference numerals presented in each drawing may indicate the same configuration, and overlapping descriptions thereof may be omitted.

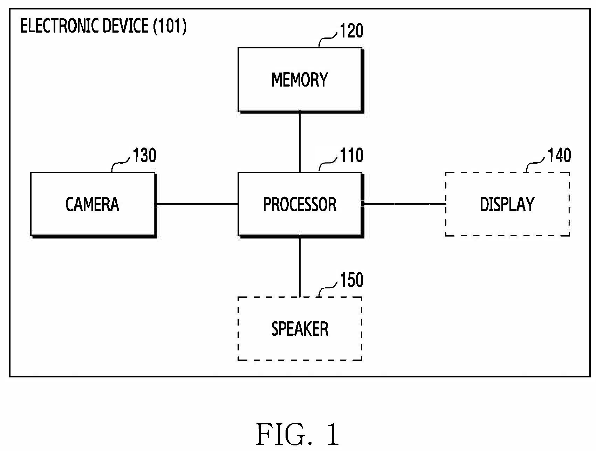

FIG. 1 is a schematic view of an electronic device according to an embodiment.

An electronic device 101 (or an external electronic device) according to various embodiments disclosed in the present document may be a device in various forms. The electronic device 101 may include, for example, a computer device, a portable multimedia device, a camera (e.g., a dash cam), a wearable device, a server, or a home appliance. The electronic device 101 (or the external electronic device) according to an embodiment of the present document is not limited to the above-described devices.

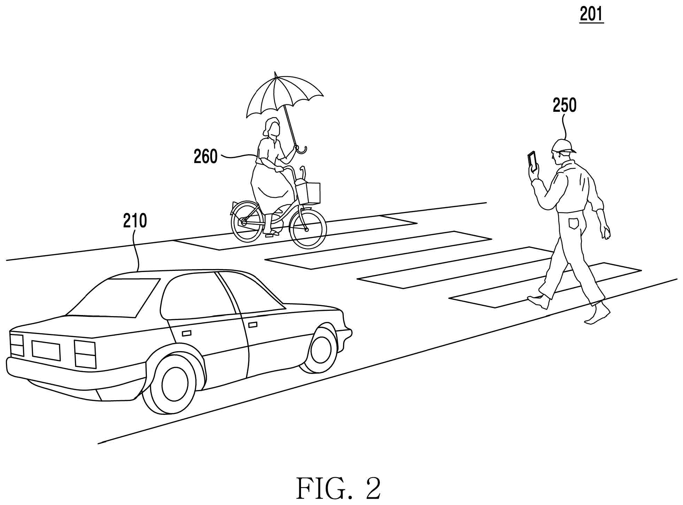

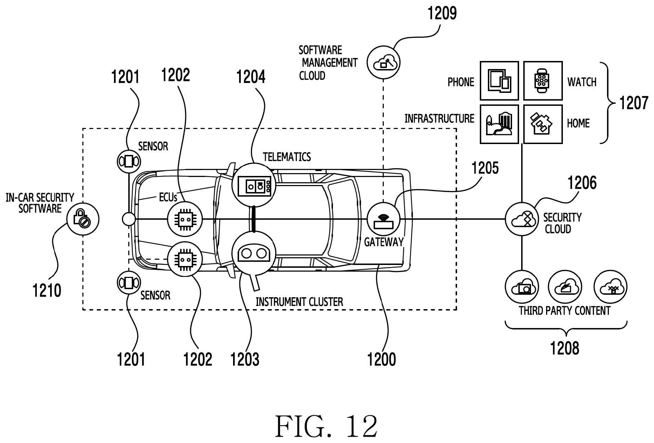

Referring to FIG. 1, the electronic device 101 may include an electronic device 101 included in a vehicle (e.g., a vehicle 210 of FIG. 2). For example, the electronic device 101 may be mounted on the vehicle 210. For example, the electronic device 101 may correspond to a device (e.g., a dash cam) attached to the vehicle 210 or may be included in the device. However, the present disclosure is not limited thereto. For example, the electronic device 101 may be built-in the vehicle 210. For example, the electronic device 101 may correspond to an electronic control unit (ECU) in the vehicle 210 or may be included in the ECU. The ECU may be referred to as an electronic control module (ECM). The electronic device 101 of FIG. 1 may include at least a portion of a control device 1200 of FIG. 12 or may correspond to at least a portion of the control device 1200 of FIG. 12.

The electronic device 101 may include at least one processor 110, memory 120, and a camera 130. For example, the electronic device 101 may further include a display 140. For example, the electronic device 101 may further include a speaker 150. A portion of hardware of FIG. 1 may be implemented as a single integrated circuit, such as a system on a chip (SoC). A type and/or the number of hardware included in the electronic device 101 is not limited to those illustrated in FIG. 1. For example, the electronic device 101 may include only a portion of the hardware illustrated in FIG. 1.

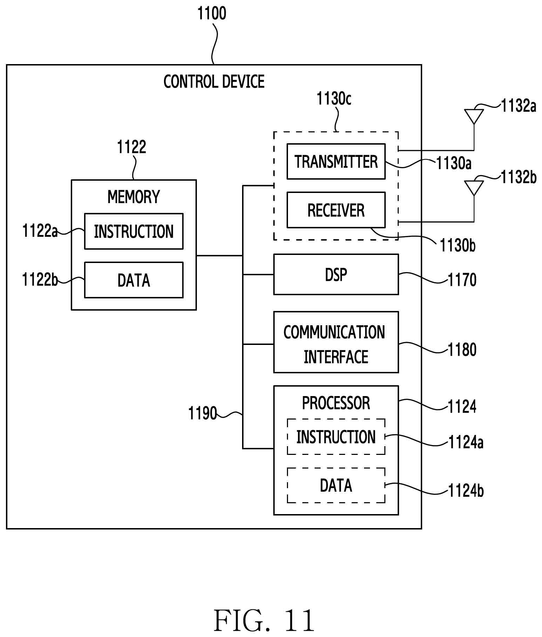

The at least one processor 110 may include at least a portion of a processor 1124 of FIG. 11 or may correspond to at least a portion of the processor 1124 of FIG. 11. The at least one processor 110 may include a central processing unit (CPU) (e.g., including processing circuitry) and a display processing unit (DPU) (e.g., including processing circuitry). As a non-limiting example, the at least one processor 110 may further include a graphic processing unit (GPU) (e.g., including processing circuitry). The at least one processor 110 may be configured to execute instructions stored in the memory 120. As a non-limiting example, the at least one processor 110 may perform at least a portion of operations described in the present disclosure by using an artificial intelligence model (e.g., a generative artificial intelligence (AI) model).

The memory 120 may include one or more storage media (or storage mediums). For example, the one or more storage media may include a permanent memory such as a hard drive, a flash memory, or a read-only memory (ROM), a semi-permanent memory such as a random access memory (RAM), any other suitable type of storage assembly, or any combination thereof. The memory 120 may include a cache memory (e.g., may be included in the processor 110), which is a memory of one or more different types used for temporarily storing data for a function or a feature of the electronic device 100. The memory 120 may be fixedly embedded in the electronic device 100, or may be incorporated onto one or more suitable types of components (e.g., a subscriber identity module (SIM) card and/or a secure digital (SD) memory card) that may be repeatedly inserted into the electronic device 100 and removed from the electronic device 100. For example, the memory 120 may include at least a portion of memory 1122 of FIG. 11 or may correspond to at least a portion of the memory 1122 of FIG. 11.

The camera 130 of the electronic device 101 may include one or more lenses and an image sensor. For example, the one or more lenses may be implemented as a lens assembly. The lens assembly may include a wide-angle lens or a telephoto lens. The one or more lenses may collect light around the camera 130 (or around the electronic device 101) to obtain an image.

For example, the image sensor in the camera 130 may convert light collected by using the one or more lenses into an electrical signal to obtain the image. The image sensor may include, for example, one image sensor selected from among image sensors having different properties, such as a red, green, blue (RGB) sensor, a black and white (BW) sensor, an infrared (IR) sensor, or an ultra violet (UV) sensor, a plurality of image sensors having the same property, or a plurality of image sensors having different properties. Each image sensor included in the image sensor may be implemented, for example, by using a charged coupled device (CCD) sensor or a complementary metal oxide semiconductor (CMOS) sensor.

The display 140 of the electronic device 101 according to an embodiment may output visualized information. For example, the display 140 may output visualized information to a user according to control of the at least one processor 110 including circuitry such as a graphic processing unit (GPU). The display 140 may include a flat panel display (FPD), and/or electronic paper. The FPD may include a liquid crystal display (LCD), a plasma display panel (PDP), and/or one or more light emitting diodes (LEDs). The LED may include an organic LED (OLED). The display 140 may not be an essential component with respect to the electronic device 101. For example, the display 140 may be an optional component of the electronic device 101.

For example, the speaker 150 of the electronic device 101 may output an audio signal. The speaker 150 may receive an electrical signal. The speaker 150 may include an element for obtaining the electrical signal. The speaker 150 may convert the electrical signal into a sound wave signal. The speaker 150 may include an element for converting the electrical signal into the sound wave signal. The speaker 150 may output an audio signal including the converted sound wave signal. The speaker 150 may include an element for outputting the audio signal. The speaker 150 may include at least one voice coil that provides vibration to a diaphragm in the speaker 150, and a magnet capable of forming a magnetic field. When a current flows in the at least one voice coil, a magnetic field formed by the voice coil may interact with a magnetic field formed by the magnet, thereby vibrating the voice coil. The diaphragm connected to the voice coil may vibrate based on the vibration of the voice coil. The speaker 150 may output an audio signal based on the diaphragm. The speaker 150 may not be an essential component with respect to the electronic device 101. For example, the speaker 150 may be an optional component of the electronic device 101.

FIG. 2 illustrates an external object located in front of a vehicle.

Referring to FIG. 2, an environment 201 may include a vehicle 210 and external objects. For example, the external objects may include a first external object 250 and a first external object 260.

The vehicle 210 may include a moving object configured to move on a ground. For example, the vehicle 210 may include an autonomous driving moving object that drives according to a control signal received from the electronic device 101 without an operation of a driver. For example, the vehicle 210 may include a vehicle (e.g., a passenger car and/or a bus) driving on a road. However, the present disclosure is not limited thereto. For example, the vehicle 210 may include a special-purpose cart (e.g., a golf cart, an article transport cart, and/or a low-speed driving means). For example, the vehicle 210 may include agricultural machinery (e.g., a tractor and/or a combine). For example, the vehicle 210 may include construction machinery.

An external object (e.g., the first external object 250 or a second external object 260) may include various types of physical objects included in a surrounding environment (e.g., the environment 201) of the vehicle 210. For example, the external object may represent a physical object (e.g., a pedestrian, a bicycle, a vehicle, and/or an animal) whose moving direction and speed change. For example, the external object may be described as an object through which the vehicle 210 may not physically pass, or an object having a risk of damage to a vehicle body or rollover when passing through.

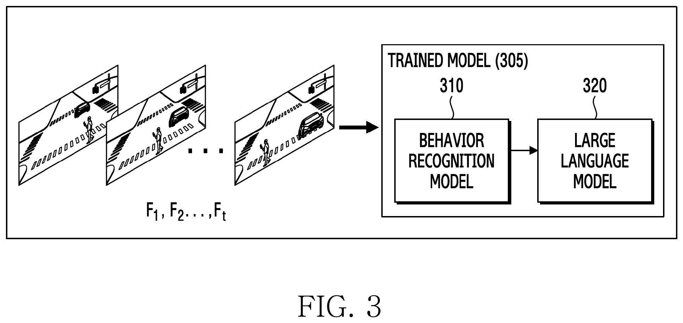

The electronic device 101 may need a model that provides collision notification information to prevent the vehicle 210 and the external object from colliding with each other. For example, the electronic device 101 may need a model for preventing a collision with the external object through a video capturing the surrounding environment of the vehicle 210. Hereinafter, in FIG. 3, a trained model for analyzing behavior (or a situation) of an external object to prevent a collision with the external object may be described.

FIG. 3 is an example of a block diagram of an electronic device for obtaining a collision probability by using a video.

Referring to FIG. 3, an electronic device 101 may obtain a video through a camera 130. For example, the electronic device 101 may obtain a video including an image for a surrounding environment. The video may include first to t-th frame images *F*₁, ... , *Fₜ*.

The electronic device 101 may input the video including the first to t-th frame images *F*₁, *..., Fₜ* into a trained model 305. For example, the electronic device 101 may input the video into the trained model 305 trained to generate collision notification information.

The trained model 305 may include a behavior recognition model 310 (e.g., a first trained model) and a large language model 320 (e.g., a second trained model). The behavior recognition model 310 may be described as a model trained to output text describing human behavior. For example, the behavior recognition model 310 may include a human activity recognition (HAR) model.

For example, the electronic device 101 may identify human behavior included in the video (or an image) through the behavior recognition model 310. For example, the electronic device 101 may extract a plurality of feature points corresponding to a body part of the human through the behavior recognition model 310, and may generate a skeleton structure representing a connection relationship of the plurality of feature points. For example, the electronic device 101 may predict movement of the human based on the skeleton structure.

The behavior recognition model 310 according to an embodiment may be trained to identify an action of the human. For example, the electronic device 101 may identify an action of the human, such as kicking, riding, moving, and/or running, through the behavior recognition model 310.

The behavior recognition model 310 according to an embodiment may identify interaction between the human and an object. For example, the electronic device 101 may identify interaction between the human and the object, such as an action of throwing the object, an action of moving the object upward or downward, an action of causing the object to collide with another object, and/or an action of moving the object, through the behavior recognition model 310.

The electronic device 101 according to an embodiment may identify behavior of the first external object 250 of FIG. 2 through the behavior recognition model 310. For example, the electronic device 101 may identify the first external object 250 looking at a smartphone through the behavior recognition model 310. For example, the electronic device 101 may identify an action of moving the smartphone of the first external object 250 through the behavior recognition model 310.

The electronic device 101 according to an embodiment may identify behavior of the second external object 260 of FIG. 2 through the behavior recognition model 310. For example, the electronic device 101 may identify the second external object 260 riding a bicycle through the behavior recognition model 310. For example, the electronic device 101 may identify an action of moving the bicycle of the second external object 260 through the behavior recognition model 310.

The behavior recognition model 310 may not describe human behavior in detail. For example, the behavior recognition model 310 may have difficulty in identifying complex behavior of the human. For example, when using only the behavior recognition model 310, the electronic device 101 may not identify complex behavior of riding the bicycle while holding an umbrella of the second external object 260.

The behavior recognition model 310 may need a heuristic approach to identify the complex behavior of the human. For example, the behavior recognition model 310 may need a predefined heuristic approach to identify the complex behavior (e.g., fighting, fainting, intrusion, loitering, a driver state, and behavior prediction) of the human.

The electronic device 101 may use the large language model 320 to identify the complex behavior of the human. For example, the electronic device 101 may input information output from the behavior recognition model 310 into the large language model 320 for natural language processing. The large language model 320 may include a large language model (LLM), and/or a vision language model (VLM).

For example, the LLM may be described as an artificial intelligence model used for summarizing, generating, and predicting text. For example, the LLM may be used to understand or generate natural language. For example, the LLM may be utilized when understanding a voice command of a user and responding to the user in a conversational manner. It may be described as an artificial intelligence model used when understanding a context and a physical characteristic of an environment.

The large language model 320 may be described as a concept including a multimodal model configured to process not only text data but also image data and/or audio data together. For example, the large language model 320 may be described as a multimodal model for understanding a complex context that is difficult to understand only with text information. For example, the large language model 320 may be configured to identify long-term interaction, a change according to a temporal trend, and/or spatial information.

The large language model 320 according to an embodiment may identify a surrounding situation of a vehicle 210. For example, the large language model 320 may describe the surrounding situation through context information. For example, the large language model 320 may identify the surrounding situation without relying on experience. For example, the large language model 320 may identify behavior that is not in a classification criterion.

The large language model 320 according to an embodiment may identify an environment 201 of the vehicle 210. For example, the large language model 320 may identify a pedestrian, a surrounding situation, terrain, and/or complex behavior of a human. For example, the electronic device 101 may identify, through the large language model 320, a vulnerable road user such as an elderly person and a child. For example, the electronic device 101 may identify, through the large language model 320, a surrounding situation such as a pedestrian standing in the middle of a road and a wet road. For example, the electronic device 101 may identify, through the large language model 320, terrain such as an intersection and low traffic volume. For example, the electronic device 101 may identify, through the large language model 320, complex behavior such as behavior of riding a bicycle while using an umbrella and an action of walking while looking at a smartphone.

The electronic device 101 according to an embodiment may identify a surrounding situation and behavior of a human included in the environment 201 of the vehicle 210 through the trained model 305. For example, the electronic device 101 may identify behavior of the human included in the environment 201 through the trained model 305 including the large language model 320 and the behavior recognition model 310. For example, the electronic device 101 may identify an appearance, behavior, and/or a moving direction of an external object included in the environment 201. For example, the electronic device 101 may identify, through the trained model 305, an action in which a man wearing a red top rides a bicycle and approaches the vehicle 210.

The electronic device 101 according to an embodiment may identify a situation of the first external object 250 through the trained model 305. For example, the electronic device 101 may identify a main action (e.g., walking), an action element (e.g., looking at a smartphone), a detailed description (e.g., weather, an appearance, a location), and/or situation information (e.g., view blockage due to the smartphone) of the first external object 250. For example, the electronic device 101 may identify a situation in which the first external object 250 wearing a black jacket and white pants crosses a crosswalk while looking at the smartphone on a day with strong sunlight.

The electronic device 101 according to an embodiment may identify a situation of the second external object 260 through the trained model 305. For example, the electronic device 101 may identify a main action (e.g., riding a bicycle), an action element (e.g., holding an umbrella), a detailed description (e.g., weather, an appearance, a location), and/or situation information (e.g., view blockage due to the umbrella) of the second external object 260. For example, the electronic device 101 may identify a situation in which the second external object 260 wearing red pants crosses a crosswalk with a face covered by the umbrella on a rainy day.

The trained model 305 included in the electronic device 101 may have high inference accuracy for a general situation, but may have relatively low inference accuracy for a dangerous situation.

The trained model 305 according to an embodiment may be configured to predict a next token. For example, the trained model 305 may be configured to infer a situation having a statistically high occurrence probability. For example, the trained model 305 may be configured to select a general (or average) situation frequently appearing in training data during inference. Accordingly, since a dangerous situation having low occurrence frequency and various contexts is included less in the training data, the trained model 305 may evaluate an occurrence probability of the dangerous situation to be low and may not infer occurrence of the dangerous situation.

The trained model 305 may identify input data, but may lack an ability to recognize and verify an actual physical environment (and a situation). Accordingly, the trained model 305 may lack an ability to recognize an actual physical risk factor. For example, in a case that a dangerous situation occurs, the electronic device 101 using only the trained model 305 may have a relatively high possibility of inferring the dangerous situation as a general situation.

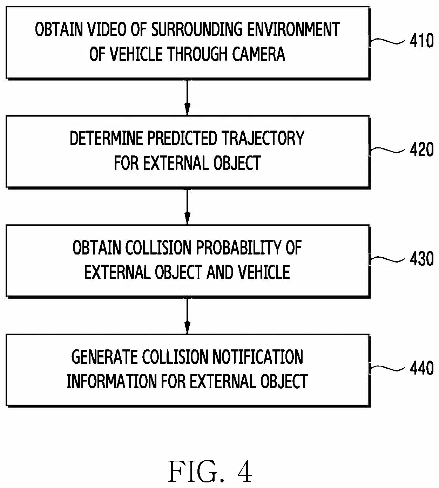

The electronic device 101 may be required to perform an operation for identifying a dangerous situation occurring around the vehicle 210. Hereinafter, in FIG. 4 to FIG. 8, an operation of the electronic device 101 for identifying a dangerous situation by using a predicted trajectory may be described.

FIG. 4 is a flowchart representing an operation of an electronic device for generating collision notification information.

Operations of FIG. 4 may be performed by the electronic device 101 and/or the at least one processor 110 of FIG. 1. The operations of FIG. 4 may be performed sequentially, but are not necessarily performed sequentially. For example, an order of the operations of FIG. 4 may be changed, and at least two operations among the operations of FIG. 4 may be performed in parallel.

Referring to operation 410, the electronic device 101 may obtain a video of a surrounding environment (e.g., the environment 201 of FIG. 2) of a vehicle 210 through a camera 130. The camera 130 may be located toward a front of a vehicle (e.g., the vehicle 210 of FIG. 2). For example, the electronic device 101 may obtain, through the camera 130, the video capturing the front of the vehicle 210. For example, the electronic device 101 may obtain, in real time, the video capturing the front of the vehicle 210 through the camera 130 while the vehicle 210 is driving. The image may include a frame image included in the video obtained by the camera 130. However, the present disclosure is not limited thereto. For example, the camera 130 may be located toward a rear of the vehicle 210. For example, the electronic device 101 may obtain, in real time, a video capturing the rear of the vehicle 210 through the camera 130 while parking.

The electronic device 101 according to an embodiment may receive, through a communication interface (e.g., a communication interface 1280 of FIG. 12), an image obtained by a camera (not illustrated) included in the vehicle 210.

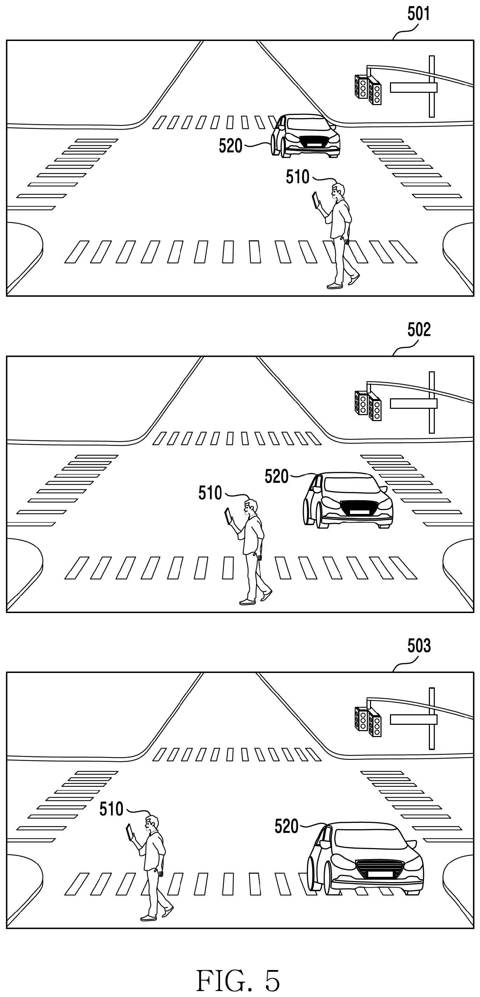

FIG. 5 is an example of a frame image included in a video obtained through a camera.

Referring to FIG. 5, a plurality of frame images 501, 502, and 503 are illustrated. For example, the plurality of frame images 501, 502, and 503 may be described as a portion of a video obtained through a camera 130. The plurality of frame images 501, 502, and 503 may be described as images obtained according to a time order. For example, the second frame image 502 may be obtained after the first frame image 501 is obtained. For example, the third frame image 503 may be obtained after the second frame image 502 is obtained. For example, the plurality of frame images 501, 502, and 503 may be referred to as images included in first to t-th frame images *F*₁, ..., *Fₜ*.

The first frame image 501 according to an embodiment may be described as an image capturing a front of a vehicle 210. As a non-limiting example, the first frame image 501 may include a pedestrian 510 and an external vehicle 520. For example, the first frame image 501 may include the pedestrian 510 crossing a crosswalk and the external vehicle 520 approaching the vehicle 210.

The second frame image 502 according to an embodiment may be described as a frame image subsequent to the first frame image 501. A pedestrian 510 in the second frame image 502 may be moved by a predetermined distance when compared with the pedestrian 510 in the first frame image 501. For example, a state of the pedestrian 510 in the second frame image 502 may be described as a state of crossing the crosswalk more than the pedestrian 510 in the first frame image 501. An external vehicle 520 in the second frame image 502 may be moved by a predetermined distance when compared with the external vehicle 520 in the first frame image 501. For example, the external vehicle 520 in the second frame image 502 may be closer to the vehicle 210 than the external vehicle 520 in the first frame image 501.

The third frame image 503 according to an embodiment may be described as a frame image subsequent to the second frame image 502. A pedestrian 510 in the third frame image 503 may be moved by a predetermined distance when compared with the pedestrian 510 in the second frame image 502. For example, a state of the pedestrian 510 in the third frame image 503 may be described as a state of crossing the crosswalk more than the pedestrian 510 in the second frame image 502. An external vehicle 520 in the third frame image 503 may be moved by a predetermined distance when compared with the external vehicle 520 in the second frame image 502. For example, the external vehicle 520 in the third frame image 503 may be closer to the vehicle 210 than the external vehicle 520 in the second frame image 502.

The first to third frame images 501, 502, and 503 according to an embodiment may include information in which the pedestrian 510 crosses the crosswalk according to a flow of time. For example, the first to third frame images 501, 502, and 503 may include information in which the external vehicle 520 approaches the vehicle 210 according to the flow of time.

Referring back to FIG. 4, in the operation 420, an electronic device 101 may determine a predicted trajectory for an external object. For example, the electronic device 101 may determine the predicted trajectory for the external object included in a surrounding environment of the vehicle 210 by using the video obtained through the camera 130. For example, the electronic device 101 may determine the predicted trajectory of the external object by inputting the video into a trajectory prediction model 610 (e.g., another trained model) trained to predict a movement trajectory of the external object. The electronic device 101 according to an embodiment may determine predicted trajectories of the pedestrian 510 and the external vehicle 520 through the first to third frame images 501, 502, and 503 of FIG. 5 obtained through the camera 130.

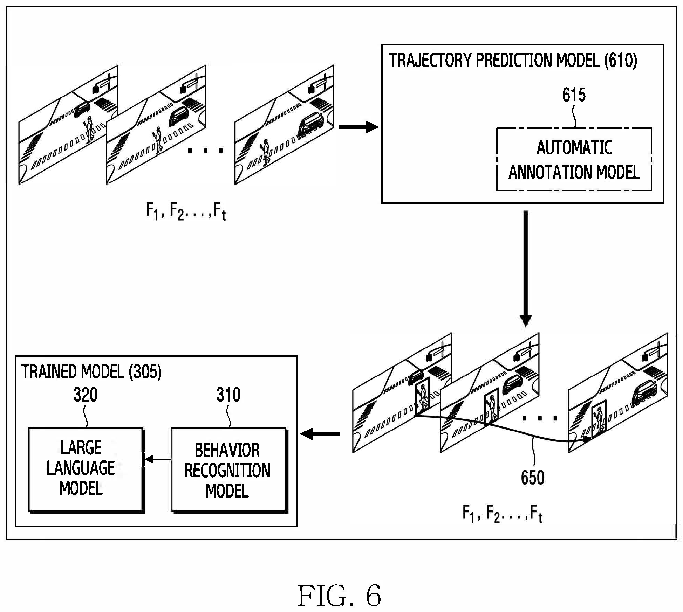

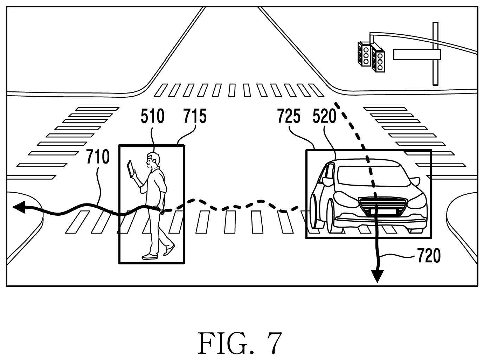

Hereinafter, in FIG. 6, the trajectory prediction model 610 may be described, and, in FIG. 7, the predicted trajectory of the external object may be described.

FIG. 6 is an example of a block diagram of an electronic device for obtaining a collision probability by using a predicted trajectory.

Referring to FIG. 6, an electronic device 101 may predict a movement trajectory of an external object included in a video by inputting first to t-th frame images *F*₁, ..., *Fₜ* included in the video into a trajectory prediction model 610. For example, the electronic device 101 may generate a past movement trajectory as annotation by tracking the external object included in the video, and may predict a future movement trajectory for subsequent T seconds based on the past movement trajectory. The T may be a predefined value, but is not limited thereto. For example, T may be a variable value according to an operation capability of the electronic device 101.

The trajectory prediction model 610 according to an embodiment may be described as a model trained through a machine learning technique. For example, machine learning may include deep learning. For example, the trajectory prediction model 610 may include a model trained to classify a type of the external object in the video. For example, the electronic device 101 may identify the external object in the video by using the trajectory prediction model 610.

The trajectory prediction model 610 according to an embodiment may identify the external object in the video by using a bounding box. For example, the trajectory prediction model 610 may include an external object included in a bounding box (e.g., a first bounding box 715 of FIG. 7). For example, the electronic device 101 may identify whether the external object is located in an external environment represented in the video by using the trajectory prediction model 610.

The electronic device 101 may identify a type of the external object corresponding to the external object by using the trajectory prediction model 610. For example, the electronic device 101 may identify the type of the external object identified by using the bounding box.

The trajectory prediction model 610 according to an embodiment may identify a type of the external object by using an image segmentation technique. For example, the image segmentation technique may be described as a technique for identifying the type of the external object by separating pixels of the external object included in the video (or image). For example, the electronic device 101 may perform the image segmentation technique by using the trajectory prediction model 610. For example, the electronic device 101 may identify or determine the type of the external object included in the video by performing the image segmentation technique with respect to the video. From the trajectory prediction model 610 trained to perform the image segmentation technique, the electronic device 101 may obtain (or identify) an external object (e.g., a road, a lane, a human, and/or a vehicle) corresponding to each of pixels of the video (or image). For example, the electronic device 101 may identify the type of the external object included in the bounding box by performing the image segmentation technique.

The trajectory prediction model 610 according to an embodiment may predict a movement trajectory of the external object. For example, the electronic device 101 may predict a next action of the external object from a movement, a posture, and a direction of the external object through the trajectory prediction model 610. For example, the electronic device 101 may predict the movement trajectory of the external object based on the predicted next action of the external object. For example, the trajectory prediction model 610 of the electronic device 101 may predict the movement trajectory of the external object according to behavior of an object and continuity of time. For example, the electronic device 101 may determine a predicted trajectory of the external object through the trajectory prediction model 610.

The trajectory prediction model 610 according to an embodiment may be trained through a video including a moving external object. For example, the trajectory prediction model 610 may be trained to predict a movement trajectory of the external object based on data (e.g., forward sequence data) in which frame images of the video including the external object are arranged according to a flow of time. For example, the trajectory prediction model 610 may be trained to predict the movement trajectory of the external object based on data (e.g., backward sequence data) in which the frame images are arranged in a reverse order of time.

The electronic device 101 according to an embodiment may include an automatic annotation model 615. The automatic annotation model 615 may be referred to as an auto video annotator. The trajectory prediction model 610 including the automatic annotation model 615 may be trained to generate (or assign) annotation information (e.g., object identification information and/or location information) to the external object included in the video.

The electronic device 101 according to an embodiment may assign annotation information to an external object included in at least one frame (e.g., *F*₁) image included in the video. The electronic device 101 may automatically assign annotation information to the external object included in remaining frame images (e.g., *F*₂, ..., *Fₜ*) other than the at least one frame through the automatic annotation model 615.

The automatic annotation model 615 according to an embodiment may store a graphical object 650 representing the movement trajectory of the external object as annotation information. For example, the annotation information may represent the graphical object 650 corresponding to a shape of the movement trajectory of the external object. The trajectory prediction model 610 may determine a predicted trajectory based on the graphical object 650 of the annotation information.

Hereinafter, in FIG. 7, the predicted trajectory determined through the trajectory prediction model 610 may be described.

FIG. 7 illustrates a predicted trajectory for an external object.

Referring to FIG. 7, predicted trajectories of external objects included in the plurality of frame images 501, 502, and 503 described in FIG. 5 are illustrated.

An electronic device 101 according to an embodiment may identify a pedestrian 510 included in a video. For example, the electronic device 101 may identify the pedestrian 510 by using a first bounding box 715. For example, the electronic device 101 may identify the pedestrian 510 included in the video by using an image segmentation technique.

The electronic device 101 according to an embodiment may identify an external vehicle 520 included in the video. For example, the electronic device 101 may identify the external vehicle 520 by using a second bounding box 725. For example, the electronic device 101 may identify the external vehicle 520 included in the video by using the image segmentation technique.

The electronic device 101 according to an embodiment may determine a first predicted trajectory 710 of the pedestrian 510. For example, the electronic device 101 may determine the first predicted trajectory 710 of the pedestrian 510 from a movement, a posture, and/or a direction of the pedestrian 510. For example, the electronic device 101 may determine the first predicted trajectory 710 according to a movement trajectory of the pedestrian 510. For example, the electronic device 101 may determine the first predicted trajectory 710 based on annotation information of the pedestrian 510.

The electronic device 101 according to an embodiment may generate a graphical object corresponding to the first predicted trajectory 710 of the pedestrian 510. As a non-limiting example, the electronic device 101 may display, through a trajectory prediction model 610, the graphical object corresponding to the first predicted trajectory 710 of the pedestrian 510.

The electronic device 101 according to an embodiment may determine a second predicted trajectory 720 of the external vehicle 520. For example, the electronic device 101 may determine the second predicted trajectory 720 of the external vehicle 520 from a movement and/or a direction of the external vehicle 520. For example, the electronic device 101 may determine the second predicted trajectory 720 according to a movement trajectory of the external vehicle 520. For example, the electronic device 101 may determine the second predicted trajectory 720 based on annotation information of the external vehicle 520.

The electronic device 101 according to an embodiment may generate a graphical object corresponding to the second predicted trajectory 720 of the external vehicle 520. As a non-limiting example, the electronic device 101 may display, through the trajectory prediction model 610, the graphical object corresponding to the second predicted trajectory 720 of the external vehicle 520.

Referring back to FIG. 4, in the operation 430, the electronic device 101 may obtain a collision probability of an external object and a vehicle. For example, the electronic device 101 may obtain a collision probability of the external object and the vehicle 210 by inputting a video and a predicted trajectory into a trained model (e.g., the trained model 305 of FIG. 6).

The electronic device 101 according to an embodiment may determine the collision probability between the vehicle 210 and the external object. For example, the electronic device 101 may calculate a distance between the vehicle 210 and the external object to determine the collision probability. For example, as the distance between the vehicle 210 and the external object is closer, the collision probability may be higher.

The electronic device 101 according to an embodiment may obtain (or determine) the collision probability based on a predicted trajectory of the external object being included in a driving path expected to be occupied by the vehicle 210. For example, the electronic device 101 may set an area occupied while the vehicle 210 is driving as the driving path. For example, the electronic device 101 may set an area occupied by the vehicle 210 after a predetermined time as the driving path.

For example, the electronic device 101 may determine whether the external object included in a surrounding environment is allowed to be included in the driving path. For example, when identifying that the external object is the pedestrian 510, the electronic device 101 may determine that the external object is not allowed to be included in the driving path. For example, when identifying that the external object is a road, the electronic device 101 may determine that the external object is allowed to be included in the driving path.

For example, the electronic device 101 may obtain a collision probability between the external object and the vehicle 210 based on the predicted trajectory of the external object (e.g., the pedestrian 510), which is not allowed to be included in the driving path, being included in the driving path of the vehicle 210.

Referring back to FIG. 6, the electronic device 101 may obtain a collision probability by inputting a video and a predicted trajectory (e.g., the first predicted trajectory 710 of FIG. 7) into the behavior recognition model 310 and inputting information output from the behavior recognition model 310 into the large language model 320. For example, the electronic device 101 may output text describing behavior and/or a posture of the external object by inputting the video and the predicted trajectory into the behavior recognition model 310 trained to output text describing human behavior. For example, when inputting the video including annotation information into the behavior recognition model 310, a recognition rate of the behavior recognition model 310 may become relatively high. For example, the electronic device 101 may obtain a collision probability between the external object and the vehicle 210 by inputting the text describing the behavior and/or the posture of the external object into the large language model 320 for natural language processing. The trained model 305 described in FIG. 6 may be referred to as the trained model 305 described in FIG. 3.

The electronic device 101 according to an embodiment may obtain a collision probability between the pedestrian 510 and the vehicle 210 by inputting frame images (e.g., the frame images 501, 502, and 503 of FIG. 5) including annotation information into the trained model 305. For example, the electronic device 101 may output information on behavior of the pedestrian 510 by inputting the video and the predicted trajectory into the behavior recognition model 310, and may obtain the collision probability by inputting the information on the behavior of the pedestrian 510 into the large language model 320. The behavior recognition model 310 may be referred to as a first trained model trained to output text describing human behavior, and the large language model 320 may be referred to as a second trained model for natural language processing.

Referring back to FIG. 4, in the operation 440, the electronic device 101 may generate collision notification information for the external object. For example, the electronic device 101 may generate, based on the collision probability, collision notification information for the external object (e.g., the pedestrian 510 of FIG. 5). For example, the electronic device 101 may generate collision notification information for the external object through the large language model 320.

The electronic device 101 according to an embodiment may generate collision notification information for the external object based on a collision probability of the external object identified as exceeding a threshold collision probability. For example, the electronic device 101 may not generate collision notification information based on a collision probability of the external object identified as being less than the threshold collision probability.

The electronic device 101 according to an embodiment may generate, through the large language model 320, a natural language sentence describing motion and/or a situation of the external object. For example, the collision notification information may include a natural language sentence describing motion and/or impression attire of the external object. For example, the collision notification information may include a natural language sentence describing a distance between the external object and the vehicle 210 and/or an expected collision time. For example, the collision notification information may include a natural language sentence notifying that the external object is approaching the vehicle 210.

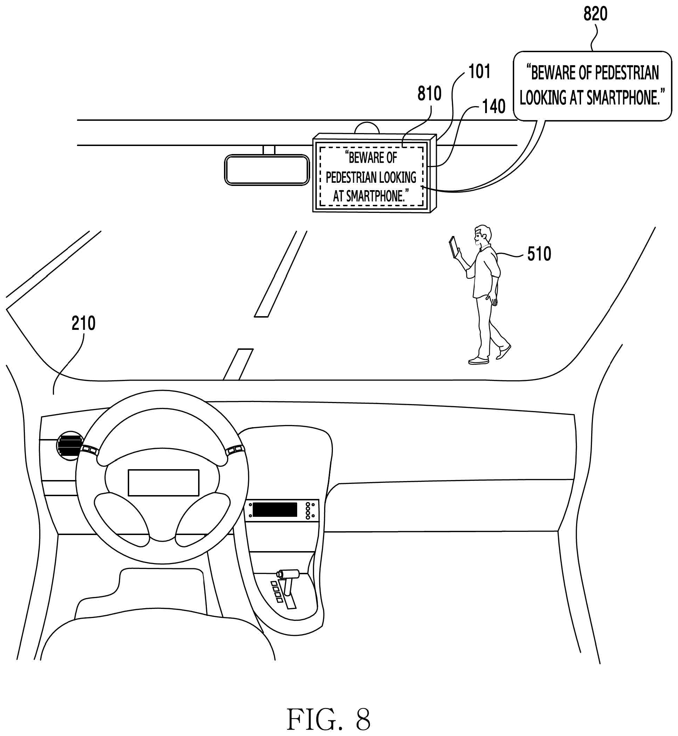

FIG. 8 illustrates an example of collision notification information provided to a user.

Referring to FIG. 8, an electronic device 101 attached to an inside of a vehicle 210 is illustrated, but the present disclosure is not limited thereto. For example, the electronic device 101 may be embedded in the vehicle 210.

The electronic device 101 according to an embodiment may include a speaker 150. The electronic device 101 may provide collision notification information through the speaker 150. For example, the electronic device 101 may transfer the collision notification information to the speaker 150 based on a collision probability. For example, the electronic device 101 may output an audio signal 820 representing the collision notification information through the speaker 150 based on the collision probability between a pedestrian 510 and the vehicle 210 exceeding a threshold collision probability. For example, the audio signal 820 representing the collision notification information may include content warning a driver of a collision risk. For example, the audio signal 820 may include content describing behavior of the pedestrian 510 (e.g., a pedestrian looking at a smartphone). For example, the audio signal 820 may include content (e.g., 5 m) for a distance between the pedestrian 510 and the vehicle 210.

The electronic device 101 according to an embodiment may transfer the collision notification information to a display 140 based on the collision probability. For example, the electronic device 101 may display, through the display 140, a screen 810 representing the collision notification information based on the collision probability between the pedestrian 510 and the vehicle 210 exceeding the threshold collision probability. For example, the screen 810 representing the collision notification information may include content warning the driver of the collision risk. For example, the screen 810 may include content describing the behavior of the pedestrian 510 (e.g., the pedestrian looking at the smartphone). For example, the screen 810 may include the content (e.g., 5 m) for the distance between the pedestrian 510 and the vehicle 210. For example, the screen 810 may include content for impression attire (e.g., wearing a hat) of the pedestrian 510.

The electronic device 101 according to an embodiment may generate a control signal for controlling a speed of a vehicle based on a collision probability. For example, the electronic device 101 may decrease a speed of the vehicle 210 or lower an upper limit of a driving speed based on the collision probability between the pedestrian 510 and the vehicle 210 exceeding the threshold collision probability.

The electronic device 101 may determine a dangerous situation by identifying behavior and a situation (or a context) of the external object included in a surrounding environment of the vehicle 210 through operations illustrated in FIG. 4 to FIG. 8. For example, the electronic device 101 including a trajectory prediction model 610 may determine the dangerous situation based on a predicted trajectory of the external object without a heuristic approach.

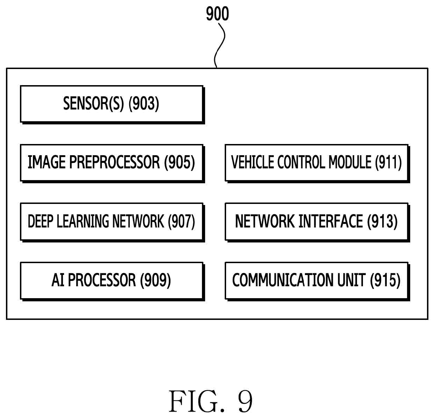

FIG. 9 illustrates an example of a block diagram illustrating an autonomous driving system of a vehicle according to an embodiment.

The autonomous driving system 900 of the vehicle according to FIG. 9 may be a deep learning network including sensors 903, an image pre-processor 905, a deep learning network 907, an artificial intelligence (AI) processor 909, a vehicle control module 911, a network interface 913, and a communication unit 915. In various embodiments, each of elements may be connected through various interfaces. For example, sensor data sensed and outputted by the sensors 903 may be fed to the image pre-processor 905. The sensor data processed by the image pre-processor 905 may be fed to the deep learning network 907 run on the AI processor 909. An output of the deep learning network 907 run by the AI processor 909 may be fed to the vehicle control module 911. Intermediate results of the deep learning network 907 run on the AI processor 909 may be fed to the AI processor 909. In various embodiments, the network interface 913 delivers autonomous driving route information and/or autonomous driving control commands for autonomous driving of the vehicle to internal block configurations, by performing communication with an electronic device (e.g., the electronic device 101 of FIG. 1) in the vehicle. In an embodiment, the network interface 913 may be used to transmit the sensor data obtained through the sensor(s) 903 to an external server. In some embodiments, the autonomous driving control system 900 may include additional or fewer components as appropriate. For example, in some embodiments, the image pre-processor 905 may be an optional component. For another example, a post-processing component (not illustrated) may be included in the autonomous driving control system 900 to perform post-processing on the output of the deep learning network 907 before the output is provided to the vehicle control module 911.

In some embodiments, the sensors 903 may include one or more sensors. In various embodiments, the sensors 903 may be attached to different locations of the vehicle. The sensors 903 may face one or more different directions. For example, the sensors 903 may be attached to a front, sides, a rear, and/or a roof of the vehicle to face directions such as forward-facing, rear-facing, and side-facing. In some embodiments, the sensors 903 may be image sensors such as high dynamic range cameras. In some embodiments, the sensors 903 include non-visual sensors. In some embodiments, the sensors 903 include RADAR, Light Detection And Ranging (LiDAR), and/or ultrasonic sensors in addition to an image sensor. In some embodiments, the sensors 903 are not mounted on a vehicle having the vehicle control module 911. For example, the sensors 903 may be included as a portion of a deep learning system for capturing the sensor data and may be attached to an environment or a roadway and/or mounted on nearby vehicles.

In some embodiments, the image pre-processor 905 may be used to pre-process the sensor data of the sensors 903. For example, the image pre-processor 905 may be used to preprocess the sensor data, to split the sensor data into one or more components, and/or to post-process one or more components. In some embodiments, the image pre-processor 905 may be a graphics processing unit (GPU), a central processing unit (CPU), an image signal processor, or a specialized image processor. In various embodiments, the image pre-processor 905 may be a tone-mapper processor for processing high dynamic range data. In some embodiments, the image pre-processor 905 may be a component of the AI processor 909.

In some embodiments, the deep learning network 907 may be a deep learning network for implementing control commands for controlling an autonomous vehicle. For example, the deep learning network 907 may be an artificial neural network such as a convolution neural network (CNN) trained by using the sensor data, and the output of the deep learning network 907 is provided to the vehicle control module 911.

In some embodiments, the artificial intelligence (AI) processor 909 may be a hardware processor for running the deep learning network 907. In some embodiments, the AI processor 909 is a specialized AI processor for performing inference on the sensor data through the convolution neural network (CNN). In some embodiments, the AI processor 909 may be optimized for a bit depth of the sensor data. In some embodiments, the AI processor 909 may be optimized for deep learning computations, such as computations of a neural network including a convolution, a dot product, a vector and/or matrix computations. In some embodiments, the AI processor 909 may be implemented through a plurality of graphics processing units (GPUs) capable of effectively performing parallel processing.

In various embodiments, the AI processor 909 may be coupled, through an input/output interface, to memory configured to perform a deep learning analysis on the sensor data received from the sensor(s) 903 while the AI processor 909 is running and to provide an AI processor having commands that cause to determine a machine learning result used to operate the vehicle at least partially autonomously. In some embodiments, the vehicle control module 911 may be used to process commands for vehicle control outputted from the artificial intelligence (AI) processor 909 and translate the output of the AI processor 909 into commands for controlling a module of each vehicle to control various modules of the vehicle. In some embodiments, the vehicle control module 911 is used to control a vehicle for autonomous driving. In some embodiments, the vehicle control module 911 may adjust steering and/or speed of the vehicle. For example, the vehicle control module 911 may be used to control traveling of the vehicle such as deceleration, acceleration, steering, lane change, lane keeping, and the like. In some embodiments, the vehicle control module 911 may generate control signals for controlling vehicle lighting, such as brake lights, turns signals, headlights, and the like. In some embodiments, the vehicle control module 911 may be used to control vehicle audio-related systems such as a vehicle's sound system, vehicle's audio warnings, a vehicle's microphone system, a vehicle's horn system, and the like.

In some embodiments, the vehicle control module 911 may be used to control notification systems, including warning systems to notify passengers and/or a driver of driving events, such as approach of an intended destination or a potential collision. In some embodiments, the vehicle control module 911 may be used to adjust sensors, such as the sensors 903 of the vehicle. For example, the vehicle control module 911 may modify the orientation of the sensors 903, change output resolution and/or a format type of the sensors 903, increase or decrease a capture rate, adjust a dynamic range, and adjust a focus of the camera. In addition, the vehicle control module 911 may turn on/off the operation of sensors individually or collectively.

In some embodiments, the vehicle control module 911 may be used to change parameters of the image pre-processor 905 in a method such as modifying a frequency range of filters, adjusting features and/or edge detection parameters for object detection, or adjusting channels and a bit depth, and the like. In various embodiments, the vehicle control module 911 may be used to control autonomous driving of the vehicle and/or a driver assistance function of the vehicle.

In some embodiments, the network interface 913 may be responsible for an internal interface between block configurations of the autonomous driving control system 900 and the communication unit 915. Specifically, the network interface 913 may be a communication interface for receiving and/or transmitting data including voice data. According to various embodiments, the network interface 913 may be connected to external servers to connect voice calls, receive and/or transmit text messages, transmit sensor data, update software of the vehicle with the autonomous driving system, or update software of the autonomous driving system of the vehicle, through the communication unit 915.

In various embodiments, the communication unit 915 may include various wireless interfaces of cellular or WiFi methods. For example, the network interface 913 may be used to receive an update on operating parameters and/or commands for the sensors 903, the image pre-processor 905, the deep learning network 907, the AI processor 909, and the vehicle control module 911 from an external server connected through the communication unit 915. For example, a machine learning model of the deep learning network 907 may be updated by using the communication unit 915. According to another example, the communication unit 915 may be used to update operating parameters of the image pre-processor 905, such as image processing parameters, and/or firmware of the sensors 903.

In another embodiment, the communication unit 915 may be used to activate communications for an emergency contact and emergency services in an accident or near-accident event. For example, in a crash event, the communication unit 915 may be used to call emergency services for assistance and may be used to externally notify emergency services of crash details and a location of the vehicle. In various embodiments, the communication unit 915 may update or obtain an expected arrival time and/or a destination location.

According to an embodiment, the autonomous driving system 900 illustrated in FIG. 9 may be configured with an electronic device 101 of the vehicle. According to an embodiment, when an autonomous driving release event occurs from a user during autonomous driving of the vehicle, the AI processor 909 of the autonomous driving system 900 may control the software of the vehicle autonomous driving to learn by controlling information related to the autonomous driving release event to be inputted as training set data of the deep learning network.

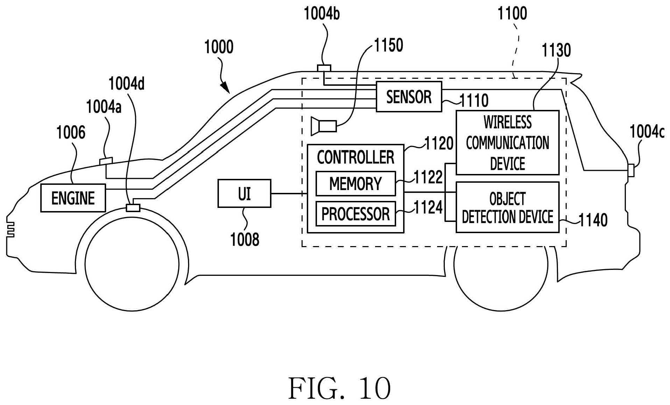

FIGS. 10 and 11 illustrate an example of a block diagram indicating an autonomous driving moving object according to an embodiment. FIG. 12 illustrates an example of a gateway related to a user device according to various embodiments.

Referring to FIG. 10, an autonomous moving object 1000 according to the present embodiment may include a control device 1100, sensing modules 1004a, 1004b, 1004c, and 1004d, an engine 1006, and a user interface 1008.

The autonomous driving moving object 1000 may have an autonomous driving mode or a manual mode. As an example, according to a user input received through the user interface 1008, it may be switched from the manual mode to the autonomous driving mode or may be switched from the autonomous driving mode to the manual mode.

In case that the moving object 1000 operates in the autonomous driving mode, the autonomous driving moving object 1000 may operate under control of the control device 1100.

In the present embodiment, the control device 1100 may include a controller 1120, including memory 1122 and a processor 1124, a sensor 1110, a communication device 1130, and an object detection device 1140.

Herein, the object detection device 1140 may perform all or a portion of a function of a distance measurement device.

That is, in the present embodiment, the object detection device 1140 is a device for detecting an object located outside the moving object 1000, and the object detection device 1140 may detect the object located outside the moving object 1000 and generate object information according to the detection result.

The object information may include information on existence or nonexistence of the object, location information of the object, distance information between the moving object and the object, and relative speed information between the moving object and the object.

The object may include various objects located outside the moving object 1000, such as a lane, another vehicle, a pedestrian, a traffic signal, light, a road, a structure, a speed bump, a landform, an animal, and the like. Herein, the traffic signal may be a concept including a traffic signal, a traffic sign, a pattern or text drawn on a road surface. In addition, the light may be light generated from a lamp equipped in another vehicle, light generated from a streetlamp, or sunlight.

In addition, the structure may be an object located around a road and fixed to the ground. For example, the structure may include a streetlamp, a street tree, a building, a power pole, a traffic light, and a bridge. The landform may include a mountain, a hill, and the like.

Such the object detection device 1140 may include a camera module. The controller 1120 may extract object information from an external image photographed by the camera module and enable the controller 1120 to process information thereon.

In addition, the object detection device 1140 may further include imaging devices for recognizing an external environment. RADAR, a GPS device, Odometry, and another computer vision device, an ultrasonic sensor, and an infrared sensor may be used, in addition to LIDAR, and these devices may be selected or operated simultaneously as needed to enable more precise detection.

Meanwhile, the distance measurement device according to an embodiment of the present invention may calculate a distance between the autonomous driving moving object 1000 and the object, and may control an operation of the moving object based on the distance calculated in connection with the control device 1100 of the autonomous driving moving object 1000.

As an example, in case that there is a probability of a collision according to the distance between the autonomous driving moving object 1000 and the object, the autonomous driving moving object 1000 may control a brake to lower a speed or stop. As another example, in case that the object is a moving object, the autonomous driving moving object 1000 may control a traveling speed of the autonomous driving moving object 1000 to maintain a predetermined distance or more from the object.

This distance measurement device according to an embodiment of the present invention may be configured as a module in the control device 1100 of the autonomous driving moving object 190. That is, the memory 1122 and the processor 1124 of the control device 1100 may be configured to implement a collision prevention method according to the present invention in software.

In addition, the sensor 1110 may obtain various sensing information by connecting an internal/external environment of the moving object with the sensing modules 1004a, 1004b, 1004c, and 1004d. Herein, the sensor 1110 may include a posture sensor (e.g., a yaw sensor, a roll sensor, a pitch sensor, a collision sensor, a wheel sensor, a speed sensor, a tilt sensor, a weight detection sensor, a heading sensor, a gyro sensor, a position module, a moving object forward/rearward sensor, a battery sensor, a fuel sensor, a tire sensor, a steering sensor by handle rotation, a moving object internal temperature sensor, a moving object internal humidity sensor, an ultrasonic sensor, an illumination sensor, an accelerator pedal position sensor, a brake pedal position sensor, and the like.

Accordingly, the sensor 1110 may obtain sensing signals for moving object posture information, moving object collision information, moving object direction information, moving object location information (GPS information), moving object angle information, moving object speed information, moving object acceleration information, moving object tilt information, moving object forward/rearward information, battery information, fuel information, tire information, moving object lamp information, and moving object internal temperature information, moving object internal humidity information, a steering wheel rotation angle, moving object external illumination, a pressure applied to an accelerator pedal, a pressure applied to a brake pedal, and the like.

In addition, the sensor 1110 may further include an accelerator pedal sensor, a pressure sensor, an engine speed sensor, an air flow sensor (AFS), an intake air temperature sensor (ATS), a water temperature sensor (WTS), a throttle position sensor (TPS), a TDC sensor, a crank angle sensor (CAS), and the like.

As such, the sensor 1110 may generate moving object state information based on sensing data.

The wireless communication device 1130 is configured to implement wireless communication between the autonomous driving moving object 1000. For example, it enables the autonomous driving moving object 1000 to communicate with a mobile phone of a user, or the other wireless communication device 1130, another moving object, a central device (a traffic control device), a server, and the like. The wireless communication device 1130 may transmit and receive a wireless signal according to an access wireless protocol. A wireless communication protocol may be Wi-Fi, Bluetooth, Long-Term Evolution (LTE), Code Division Multiple Access (CDMA), Wideband Code Division Multiple Access (WCDMA), Global Systems for Mobile Communications (GSM), but the communication protocol is not limited thereto.

In addition, in the present embodiment, it is also possible for the autonomous driving moving object 1000 to implement communication between moving objects through the wireless communication device 1130. That is, the wireless communication device 1130 may perform communication with another moving object and other moving objects on the road through vehicle-to-vehicle (V2V) communication. The autonomous driving moving object 1000 may transmit and receive information such as driving warning and traffic information through the vehicle-to-vehicle (V2V) communication, and it is also possible to request information from, or receive a request from the other moving object. For example, the wireless communication device 1130 may perform the V2V communication as a dedicated short-range communication (DSRC) device or a Cellular-V2V (C-V2V) device. In addition, besides the vehicle-to-vehicle (V2V) communication, communication (e.g., Vehicle to Everything communication (V2X)) between a vehicle and another object (e.g., an electronic device carried by a pedestrian, and the like) may also be implemented through the wireless communication device 1130.

In addition, the wireless communication device 1130 may obtain information generated from various mobilities, including infrastructure (a traffic light, a CCTV, a RSU, a eNode B, and the like) located on the road or other autonomous driving/non-autonomous driving vehicles, and the like, through a non-terrestrial network other than a terrestrial network, as information for autonomous driving performance of the autonomous driving moving object 1000.

For example, the wireless communication device 1130 may perform wireless communication through a Low Earth Orbit (LEO) satellite system, a Medium Earth Orbit (MEO) satellite system, a Geostationary Orbit (GEO) satellite system, a High Altitude Platform (HAP) system, and the like, that configure a non-terrestrial network and an antenna dedicated to the non-terrestrial network mounted on the autonomous driving moving object 1000.

For example, the wireless communication device 1130 may perform wireless communication with various platforms configuring the NTN according to a 5TH Generation New Radio Non-Terrestrial Network (5G NR NTN) standard, which is currently discussed in 3GPP, and the like, but is not limited thereto.

In the present embodiment, the controller 1120 may select a platform that may properly perform NTN communication in consideration of various information such as a location of the autonomous driving moving object 1000, current time, and available power, and control the wireless communication device 1130 to perform wireless communication with the selected platform.

In the present embodiment, the controller 1120, which is a unit that controls an overall operation of each unit in the moving object 1000, may be configured by a manufacturer of the moving object when manufacturing or may be additionally configured to perform a function of autonomous driving after manufacturing. In addition, a configuration for performing a continuous additional function may be included through an upgrade of the controller 1120 configured when manufacturing. This controller 1120 may also be named an Electronic Control Unit (ECU).

The controller 1120 may collect various data from the connected sensor 1110, the object detection device 1140, the communication device 1130, and may transmit a control signal to the sensor 1110, the engine 1006, the user interface 1008, the communication device 1130, and the object detection device 1140 included in other components in the moving object based on the collected data. In addition, although not illustrated, the control signal may also be transmitted to an acceleration device, a braking system, a steering device, or a navigation device related to traveling of the moving object.

In the present embodiment, the controller 1120 may control the engine 1006, for example, may detects a speed limit of a road on which the autonomous driving moving object 1000 is traveling, and may control the engine 1006 so that a traveling speed does not exceed the speed limit or may control the engine 1006 to accelerate the traveling speed of the autonomous driving moving object 1000 in a range that does not exceed the speed limit.

In addition, when the autonomous driving moving object 190 approaches a lane or leaves the lane while the autonomous driving moving object 1000 is traveling, the controller 1120 may determine whether such lane approaching and leaving are due to a normal traveling situation or another traveling situation, and may control the engine 1006 to control the traveling of the moving object according to the determination result. Specifically, the autonomous driving moving object 1000 may detect lanes formed on both sides of the lane in which the moving object is traveling. In this case, the controller 1120 may determine whether the autonomous driving moving object 1000 approaches the lane or leaves the lane, and if it is determined that the autonomous driving moving object 1000 approaches the lane or leaves the lane, the controller 1120 may determine whether this traveling is according to an accurate traveling situation or another traveling situation. Herein, as an example of the normal traveling situation, it may be a situation in which a lane change of the moving object is required. In addition, as an example of the other driving situations, it may be a situation in which a lane change of the moving object is not required. When it is determined that the autonomous driving moving object 1000 is approaching the lane or leaving the lane in a situation in which the moving object does not need to change lane, the controller 1120 may control the traveling of the autonomous driving moving object 1000 so that the autonomous driving moving object 1000 does not leave the lane and normally travels in a corresponding vehicle.

In case that another moving object or an obstacle exists in a front of the moving object, it may control the engine 1006 or the braking system to decelerate the driving moving object, and may control a trajectory, a traveling route, and a steering angle in addition to speed. Alternatively, the controller 1120 may control the traveling of the moving object by generating a necessary control signal according to recognition information of another external environment, such as a traveling lane or a driving signal of the moving object.

In addition to generating its own control signal, the controller 1120 may also control the traveling of the moving object by performing communication with a nearby moving object or a central server and transmitting a command to control peripheral devices through the received information.

In addition, since accurate recognition of the moving object or lane according to the present embodiment may be difficult in case that a location of the camera module 1150 changes or an angle of view changes, the controller 1120 may generate a control signal for controlling to perform calibration of the camera module 1150 to prevent this. Therefore, in the present embodiment, by generating the calibration control signal to the camera module 1150, the controller 1120 may continuously maintain a normal mounting location, a direction, an angle of view, and the like of the camera module 1150 even when a mounting location of the camera module 1150 is changed due to vibration or impact generated by a movement of the autonomous driving moving object 1000. In case that an initial mounting location, a direction, and an angle of view information of the camera module 1150 that are pre-stored, and an initial mounting location, a direction, an angle of view information, and the like of the camera module 1150 measured while the autonomous driving moving object 800 is traveling are changed by a threshold value or more, the controller 1120 may generate the control signal to perform the calibration of the camera module 1150.

In the present embodiment, the controller 1120 may include the memory 1122 and the processor 1124. The processor 1124 may execute software stored in the memory 1122 according to the control signal of the controller 1120. Specifically, the controller 1120 may store data and commands for performing the lane detection method according to the present invention in the memory 1122, and the commands may be executed by the processor 1124 to implement one or more methods disclosed herein.

In this case, the memory 1122 may be stored in a recording medium executable by the nonvolatile processor 1124. The memory 1122 may store software and data through an appropriate internal/external device. The memory 1122 may be configured with random access memory (RAM), read only memory (ROM), a hard disk, and a memory 1122 device connected with a dongle.

The memory 1122 may at least store an Operating system (OS), a user application, and executable commands. The memory 1122 may also store application data and array data structures.

The processor 1124, which is a microprocessor or an appropriate electronic processor, may be a controller, a microcontroller, or a state machine.

The processor 1124 may be implemented as a combination of computing devices, and the computing device may be configured with a digital signal processor, a microprocessor, or an appropriate combination thereof.

Meanwhile, the autonomous driving moving object 1000 may further include the user interface 1008 for a user input with respect to the above-described control device 1100. The user interface 1008 may enable a user to input information with appropriate interaction. For example, it may be implemented as a touch screen, a keypad, or an operation button, and the like. The user interface 1008 may transmit an input or a command to the controller 1120, and the controller 1120 may perform a control operation of the moving object in response to the input or the command.

In addition, the user interface 1008, which is a device outside the autonomous driving moving object 1000, may perform communication with the autonomous driving moving object 1000 through the wireless communication device 1130. For example, the user interface 808 may be linkable with a mobile phone, a tablet, or another computer device.

Furthermore, in the present embodiment, the autonomous driving moving object 1000 has been described as including the engine 1006, but it may also include another type of a propulsion system. For example, the moving object may be operated with electrical energy, and may be operated through hydrogen energy or a hybrid system combining them. Therefore, the controller 1120 may include a propulsion mechanism according to the propulsion system of the autonomous driving moving object 1000 and may provide a control signal according to this to components of each propulsion mechanism.

Hereinafter, a detailed configuration of the control device 1100 according to the present invention according to the present embodiment will be described in more detail with reference to FIG. 11.

A control device 1100 includes a processor 1124. The processor 1124 may be a general-purpose single or multi-chip microprocessor, a dedicated microprocessor, a microcontroller, a programmable gate array, and the like. The processor may be referred to as a central processing unit (CPU). In addition, in the present embodiment, it is possible that the processor 1124 is used as a combination of a plurality of processors.

The control device 1100 also includes memory 1122. The memory 1122 may be any electronic component capable of storing electronic information. The memory 1122 may also include a combination of the memories 1122 in addition to single memory.

Data and commands 1122a for performing a distance measuring method of a distance measuring device according to the present invention may be stored in the memory 1122. When the processor 1124 executes the commands 1122a, all or a portion of the commands 1122a and the data 1122b required for performing a command may be loaded 1124a and 924b onto the processor 1124.

The control device 1100 may include a transmitter 1130a, a receiver 1130b, or a transceiver 1130c for permitting transmission and reception of signals. One or more antennas 1122a and 1122b may be electrically connected to the transmitter 1130a, the receiver 1130b, or each transceiver 1130c, and may further include antennas.

The control device 1100 may include a digital signal processor (DSP) 1170. Through the DSP 1170, the digital signal may be quickly processed by a moving object.

The control device 1100 may include a communication interface 1180. The communication interface 1180 may include one or more ports and/or communication modules for connecting other devices to the control device 1100. The communication interface 1180 may enable a user and the control device 1100 to interact with each other.

Various configurations of the control device 1100 may be connected together by one or more buses 1190, and the buses 1190 may include a power bus, a control signal bus, a state signal bus, a data bus, and the like. Under a control of the processor 1124, configurations may transmit mutual information through the bus 1190 and perform a desired function.

Meanwhile, in various embodiments, the control device 1100 may be related to a gateway for communication with a security cloud. For example, referring to FIG. 12, the control device 1100 may be related to a gateway 1205 for providing information obtained from at least one of components 903 to 9015 of a vehicle 1200 to a security cloud 1206. For example, the gateway 1205 may be included in the control device 1100. For another example, the gateway 1205 may be configured as a separate device in the vehicle 1200 that is distinguished from the control device 1100. The gateway 1205 connects a network in the vehicle 1200 secured by a software management cloud 1209, the security cloud 1206, and in-car security software 1210, having different networks, to enable communication.

For example, a component 1201 may be a sensor. For example, the sensor may be used to obtain information on at least one of a state of the vehicle 1200 or a state around the vehicle 1200. For example, the component 1201 may include a sensor 910.

For example, a component 1202 may be electronic control units (ECUs). For example, the ECUs may be used for engine control, transmission control, airbag control, and tire pressure management.

For example, a component 1203 may be an instrument cluster. For example, the instrument cluster may mean a panel located in a front of a driver's seat among dashboards. For example, the instrument cluster may be configured to display information necessary for driving to a driver (or a passenger). For example, the instrument cluster may be used to display at least one of visual elements for indicating a revolutions per minute (or rotates per minute) (RPM) of the engine, visual elements for indicating a speed of the vehicle 1200, visual elements for indicating an amount of remaining fuel, visual elements for indicating a state of a gear, or visual elements for indicating information obtained through the component 1201.

For example, a component 1204 may be a telematics device. For example, the telematics device may mean a device that provides various mobile communication services, such as location information and safe driving in the vehicle 1200 by coupling wireless communication technology and global positioning system (GPS) technology. For example, the telematics device may be used to connect the vehicle 1200 with a driver, a cloud (e.g., the security cloud 1206), and/or a surrounding environment. For example, the telematics device may be configured to support high bandwidth and low latency for 5G NR-standard technology (e.g., V2X technology of the 5G NR, Non-Terrestrial Network (NTN) technology of the 5G NR). For example, the telematics device may be configured to support autonomous driving of the vehicle 1200.

For example, the gateway 1205 may be used to connect a network within the vehicle 1200, and the software management cloud 1209 and the secure cloud 1206, which are a network outside the vehicle. For example, the software management cloud 1209 may be used to update or manage at least one software necessary for traveling and managing the vehicle 1200. For example, the software management cloud 1209 may be linked to the in-car security software 99 installed in the vehicle. For example, the in-car security software 1210 may be used to provide a security function in the vehicle 1200. For example, the in-car security software 1210 may encrypt data transmitted and received through an in-car network using an encryption key obtained from an external authorized server for encryption of the in-car network. In various embodiments, the encryption key used by the in-car security software 1210 may be generated corresponding to vehicle identification information (a vehicle license plate, a vehicle identification number (VIN)) or information (e.g., user identification information) uniquely assigned to each user.

In various embodiments, the gateway 1205 may transmit the data encrypted by the in-car security software 1210 based on the encryption key to the software management cloud 1209 and/or the security cloud 1206. The software management cloud 1209 and/or the security cloud 1206 may identify the data received from which vehicle or which user by decrypting the data encrypted by the encryption key of the in-car security software 1210. For example, since the decryption key is a unique key corresponding to the encryption key, the software management cloud 1209 and/or the security cloud 1206 may identify a transmission entity (e.g., the vehicle or the user) of the data based on the data decrypted through the decryption key.

For example, the gateway 1205 may be configured to support in-car security software 1210 and may be related to the control device 1100. For example, the gateway 1205 may be related to the control device 1100 to support a connection between a client device 907 and the control device 1100 connected to the security cloud 1206. For another example, the gateway 1205 may be related to the control device 1100 to support a connection between a third-party cloud 1208 connected to the security cloud 1206 and the control device 1100. However, it is not limited thereto.

In various embodiments, the gateway 1205 may be used to connect the vehicle 1200 with the software management cloud 1209 to manage operating software of the vehicle 1200. For example, the software management cloud 1209 may monitor whether updating the operating software of the vehicle 1200 is required, and based on monitoring that the updating the operating software of the vehicle 1200 is required, provide data for the updating the operating software of the vehicle 1200 through the gateway 1205. For another example, the software management cloud 1209 may receive a user request for updating the operating software of the vehicle 1200 from the vehicle 1200 through the gateway 1205, and provide data for updating the operating software of the vehicle 1200 based on the reception. However, it is not limited thereto.

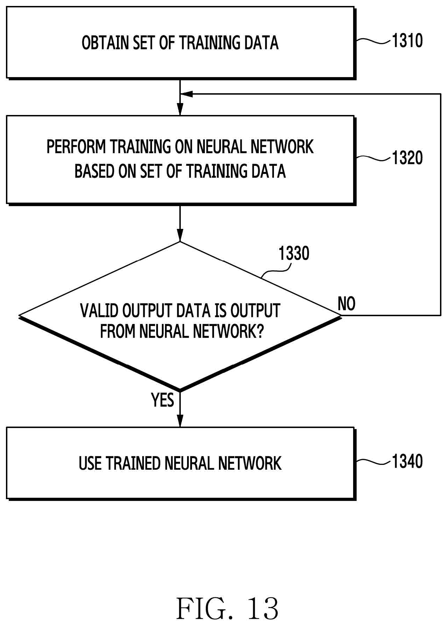

FIG. 13 is a diagram for explaining an operation of an electronic device for training a neural network based on a set of learning data, according to an embodiment.

An operation described with reference to FIG. 13 may be performed by the above-described electronic device (e.g., the electronic device 101 of FIG. 2).

Referring to FIG. 13, in operation 1310, the electronic device may obtain the set of the learning data according to an embodiment. The electronic device may obtain the set of the learning data for supervised learning. The learning data may include a pair of input data and ground truth data corresponding to the input data. The ground truth data may indicate output data to be obtained from the neural network that has received the input data, which is the pair of the ground truth data. The ground truth data may be obtained by the electronic device described above.

For example, in case of training the neural network for image recognition, the learning data may include information regarding an image and one or more subjects included within the image. The information may include a category (or a class) of a subject identifiable through the image. The information may include a location, a width, a height, and/or a size of a visual object corresponding to the subject within the image. The set of the learning data identified through the operation 1310 may include pairs of a plurality of learning data. In the example of training the neural network for the image recognition, the set of the learning data identified by the electronic device may include a plurality of images and ground truth data corresponding to each of the plurality of images.

Referring to FIG. 13, in operation 1320, the electronic device according to an embodiment may perform training on the neural network based on the set of the learning data. In an embodiment in which the neural network is trained based on the supervised learning, the electronic device may input the input data included in the learning data to an input layer of the neural network. An example of the neural network including the input layer will be described with reference to FIG. 9. From an output layer of the neural network receiving the input data through the input layer, the electronic device may obtain output data of the neural network corresponding to the input data.

In an embodiment, the training of the operation 1320 may be performed based on a difference between the output data and the ground truth data included in the learning data and corresponding to the input data. For example, the electronic device may adjust one or more parameters related to the neural network (e.g., a weight to be described later with reference to FIG. 9) to reduce the difference based on a gradient descent algorithm. An operation of the electronic device adjusting the one or more parameters may be referred to as tuning for the neural network. The electronic device may perform the tuning of the neural network based on the output data using a function defined to evaluate performance of the neural network, such as a cost function. The difference between the output data and the ground truth data may be included as an example of the cost function.

Referring to FIG. 13, in operation 1330, according to an embodiment, the electronic device may identify whether valid output data is outputted from the neural network trained by the operation 1320. The output data being valid may mean that the difference (or the cost function) between the output data and the ground truth data satisfies a condition set for use of the neural network. For example, in case that an average value and/or the maximum value of the difference between the output data and the ground truth data is less than or equal to a designated threshold value, the electronic device may determine that the valid output data is outputted from the neural network.

In case that the valid output data is not outputted from the neural network (1330-NO), the electronic device may repeatedly perform training of the neural network based on the operation 1320. An embodiment is not limited thereto, and the electronic device may repeatedly perform the operations 1302 and 194.

In a state in which the valid output data is obtained from the neural network (1330-YES), based on operation 1340, the electronic device according to an embodiment may use the trained neural network. For example, the electronic device may input other input data to the neural network that is distinct from the input data inputted to the neural network as the learning data. The electronic device may use output data obtained from the neural network receiving the other input data as a result of performing inference on the other input data based on the neural network.

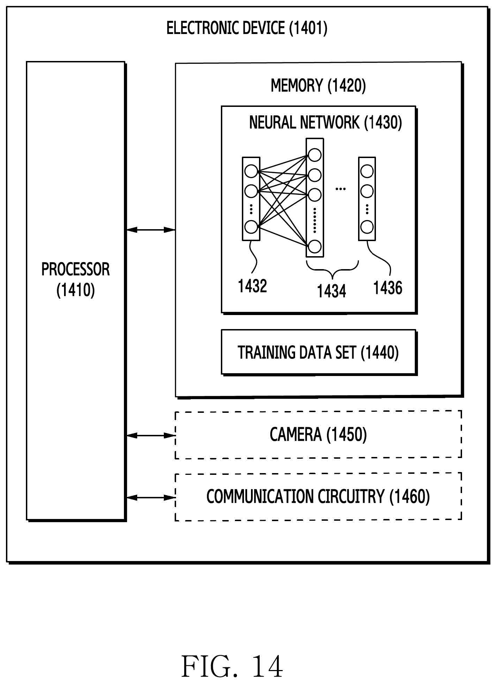

FIG. 14 is a block diagram of an electronic device according to an embodiment.

An electronic device 1401 of FIG. 14 may include the above-described electronic device (e.g., the electronic device 101).

For example, an operation described with reference to FIG. 13 may be performed by the electronic device 1401 of FIG. 14 and/or a processor 1410 of FIG. 14.

Referring to FIG. 14, the processor 1410 of the electronic device 1401 may perform computations related to a neural network 1430 stored in memory 1420. The processor 1410 may include at least one of a center processing unit (CPU), a graphic processing unit (GPU), and a neural processing unit (NPU). The NPU may be implemented as a chip separated from the CPU, or integrated into a chip such as the CPU in a form of a system on a chip (SoC). The NPU integrated into the CPU may be referred to as a neural core and/or an artificial intelligence (AI) accelerator.

Referring to FIG. 14, the processor 1410 may identify the neural network 1430 stored in the memory 1420. The neural network 1430 may include a combination of an input layer 1432, one or more hidden layers 1434 (or intermediate layers), and an output layer 1436. The above-described layers (e.g., the input layer 1432, the one or more hidden layers 1434, and the output layer 1436) may include a plurality of nodes. The number of hidden layers 1434 may vary according to an embodiment, and the neural network 1430 including the plurality of hidden layers 1434 may be referred to as a deep neural network. An operation of training the deep neural network may be referred to as deep learning.

In an embodiment, in case that the neural network 1430 has a structure of a feed forward neural network, a first node included in a specific layer may be connected to all of second nodes included in another layer before the specific layer. In the memory 1420, parameters stored for the neural network 1430 may include weights assigned to connections between the second nodes and the first node. In the neural network 1430 having the structure of the feed forward neural network, a value of the first node may correspond to a weighted sum of values assigned to the second nodes, based on the weights assigned to the connections connecting the second nodes and the first node.

In an embodiment, in case that the neural network 1430 has a structure of a convolutional neural network, the first node included in the specific layer may correspond to a weighted sum of a portion of the second nodes included in the other layer before the specific layer. The portion of the second nodes corresponding to the first node may be identified by a filter corresponding to the specific layer. In the memory 1420, the parameters stored for the neural network 1430 may include weights indicating the filter. The filter may include, among the second nodes, one or more nodes to be used to calculate a weighted sum of the first node, and weights corresponding to each of the one or more nodes.

According to an embodiment, the processor 1410 of the electronic device 1401 may perform training on the neural network 1430 using a learning data set 1440 stored in the memory 1420. Based on the learning data set 1440, the processor 1410 may adjust one or more parameters stored in the memory 1420 for the neural network 1430 by performing the operation described with reference to FIG. 13.

According to an embodiment, the processor 1410 of the electronic device 1401 may perform object detection, object recognition, and/or object classification using the neural network 1430 trained based on the learning data set 1440. The processor 1410 may input an image (or a video) obtained through a camera 1450 into the input layer 1432 of the neural network 1430. Based on the input layer 1432 to which the image is inputted, the processor 1410 may obtain a set (e.g., the output data) of values of the nodes of the output layer 1436 by sequentially obtaining values of the nodes of the layers included in the neural network 1430. The output data may be used as a result of inferring information included in the image using the neural network 1430. An embodiment is not limited thereto, and the processor 1410 may input an image (or a video) obtained from an external electronic device connected to the electronic device 1401 through communication circuitry 1460 to the neural network 1430.

In an embodiment, the neural network 1430 trained to process an image may be used to identify a region corresponding to a subject within the image (object detection), and/or to identify a class of the subject represented within the image (object recognition and/or object classification). For example, the electronic device 1401 may segment the region corresponding to the subject within the image based on a quadrangle shape such as a bounding box, using the neural network 1430. For example, the electronic device 1401 may identify at least one class matching the subject among a plurality of designated classes using the neural network 1430.

As described above, an electronic device for controlling a vehicle is provided. The electronic device may comprise a camera. The electronic device may comprise at least one processor. The at least one processor may be configured to obtain, via the camera, a video of a surrounding environment of the vehicle. The at least one processor may be configured to determine a predicted trajectory for an external object included in the surrounding environment using the video. The at least one processor may be configured to obtain a collision probability between the external object and the vehicle by inputting the video and the predicted trajectory into a trained model. The at least one processor may be configured to generate collision notification information for the external object based on the collision probability.

The trained model may comprise a first trained model and a second trained model. The at least one processor may be configured to input the video and the predicted trajectory into the first trained model, which is trained to output text describing human behavior. The at least one processor may be configured to obtain the collision probability by inputting information output from the first trained model into the second trained model for natural language processing.

The at least one processor may be configured to determine the predicted trajectory for the external object by inputting the video into another trained model trained to predict a movement trajectory of an object.

The at least one processor may be configured to generate annotation information of the external object by inputting the video into another trained model trained to perform annotation on an object. The annotation information may represent a graphical object corresponding to a shape of a movement trajectory of the external object. It may be configured to determine the predicted trajectory according to the annotation information of the external object.

The collision notification information may comprise a natural language sentence describing a motion of the external object.

The collision notification information may comprise a natural language sentence notifying that the external object is approaching the vehicle.

The at least one processor may be configured to generate a control signal for controlling a speed of the vehicle based on the collision probability.

The at least one processor may be configured to obtain the collision probability based on the predicted trajectory for the external object being included in a driving path expected to be occupied by the vehicle.

The electronic device may comprise a speaker. The at least one processor may be configured to output, via the speaker, an audio signal representing the collision notification information based on the collision probability.

The electronic device may comprise a display. The at least one processor may be configured to display, via the display, a screen representing the collision notification information based on the collision probability.

A method executed by an electronic device for controlling a vehicle with a camera is provided. The method may comprise obtaining, via the camera, a video of a surrounding environment of the vehicle. The method may comprise determining a predicted trajectory for an external object included in the surrounding environment using the video. The method may comprise obtaining a collision probability between the external object and the vehicle by inputting the video and the predicted trajectory into a trained model. The method may comprise generating collision notification information for the external object based on the collision probability.

The trained model may comprise a first trained model and a second trained model. The method may comprise inputting the video and the predicted trajectory into the first trained model, which is trained to output text describing human behavior. The method may comprise obtaining the collision probability by inputting information output from the first trained model into the second trained model for natural language processing.

The method may comprise determining the predicted trajectory for the external object by inputting the video into another trained model trained to predict a movement trajectory of an object.

The method may comprise generating annotation information of the external object by inputting the video into another trained model trained to perform annotation on an object. The annotation information may represent a graphical object corresponding to a shape of a movement trajectory of the external object. The method may comprise determining the predicted trajectory according to the annotation information of the external object.

The method may comprise generating a control signal for controlling a speed of the vehicle based on the collision probability.

The method may comprise obtaining the collision probability based on the predicted trajectory for the external object being included in a driving path expected to be occupied by the vehicle.

A non-transitory computer readable storage medium is provided. The non-transitory computer readable storage medium may store one or more programs. The one or more programs may comprise instructions to, when executed by an electronic device for controlling a vehicle with a camera, cause the electronic device to obtain, via the camera, a video of a surrounding environment of the vehicle. The one or more programs may comprise instructions to, when executed by the electronic device, cause the electronic device to determine a predicted trajectory for an external object included in the surrounding environment using the video. The one or more programs may comprise instructions to, when executed by the electronic device, cause the electronic device to obtain a collision probability between the external object and the vehicle by inputting the video and the predicted trajectory into a trained model. The one or more programs may comprise instructions to, when executed by the electronic device, cause the electronic device to generate collision notification information for the external object based on the collision probability.

The trained model may comprise a first trained model and a second trained model. The one or more programs may comprise instructions to, when executed by the electronic device, cause the electronic device to input the video and the predicted trajectory into the first trained model, which is trained to output text describing human behavior. The one or more programs may comprise instructions to, when executed by the electronic device, cause the electronic device to obtain the collision probability by inputting information output from the first trained model into the second trained model for natural language processing.

The one or more programs may comprise instructions to, when executed by the electronic device, cause the electronic device to determine the predicted trajectory for the external object by inputting the video into another trained model trained to predict a movement trajectory of an object.

The one or more programs may comprise instructions to, when executed by the electronic device, cause the electronic device to generate annotation information of the external object by inputting the video into another trained model trained to perform annotation on an object. The annotation information represents a graphical object corresponding to a shape of a movement trajectory of the external object. The one or more programs may comprise instructions to, when executed by the electronic device, cause the electronic device to determine the predicted trajectory according to the annotation information of the external object.

## Claims

1. An electronic device (101) for controlling a vehicle (210), comprising:
a camera (130); and
at least one processor (110),
wherein the at least one processor (110) is configured to:
obtain, via the camera (130), a video of a surrounding environment of the vehicle (210);
determine a predicted trajectory (710) for an external object (510) included in the surrounding environment using the video;
obtain a collision probability between the external object (510) and the vehicle (210) by inputting the video and the predicted trajectory (710) into a trained model (305); and
generate collision notification information for the external object (510) based on the collision probability.

2. The electronic device (101) of claim 1,
wherein the trained model (305) comprises a first trained model (310) and a second trained model (320), and
wherein the at least one processor (110) is configured to:
input the video and the predicted trajectory (710) into the first trained model (310), which is trained to output text describing human behavior, and
obtain the collision probability by inputting information output from the first trained model (310) into the second trained model (320) for natural language processing.

3. The electronic device (101) of claim 1,
wherein the at least one processor (110) is configured to determine the predicted trajectory (710) for the external object (510) by inputting the video into another trained model (610) trained to predict a movement trajectory of an object.

4. The electronic device (101) of claim 1,
wherein the at least one processor (110) is configured to:
generate annotation information of the external object (510) by inputting the video into another trained model (610) trained to perform annotation on an object, wherein the annotation information represents a graphical object corresponding to a shape of a movement trajectory of the external object (510), and
determine the predicted trajectory (710) according to the annotation information of the external object (510).

5. The electronic device (101) of claim 1,
wherein the collision notification information comprises a natural language sentence describing a motion of the external object (510).

6. The electronic device (101) of claim 1,
wherein the collision notification information comprises a natural language sentence notifying that the external object (510) is approaching the vehicle (210).

7. The electronic device (101) of claim 1,
wherein the at least one processor (110) is configured to generate a control signal for controlling a speed of the vehicle (210) based on the collision probability.

8. The electronic device (101) of claim 1,
wherein the at least one processor (110) is configured to obtain the collision probability based on the predicted trajectory (710) for the external object (510) being included in a driving path expected to be occupied by the vehicle (210).

9. The electronic device (101) of claim 1, comprising:
a speaker (150),
wherein the at least one processor (110) is configured to output, via the speaker (150), an audio signal representing the collision notification information based on the collision probability.

10. The electronic device (101) of claim 1, comprising:
a display (140),
wherein the at least one processor (110) is configured to display, via the display (140), a screen representing the collision notification information based on the collision probability.

11. A method executed by an electronic device (101) for controlling a vehicle (210) with a camera (130), the method comprising:
obtaining, via the camera (130), a video of a surrounding environment of the vehicle (210);
determining a predicted trajectory (710) for an external object (510) included in the surrounding environment using the video;
obtaining a collision probability between the external object (510) and the vehicle (210) by inputting the video and the predicted trajectory (710) into a trained model (305); and
generating collision notification information for the external object (510) based on the collision probability.

12. The method of claim 11,
wherein the trained model (305) comprises a first trained model (310) and a second trained model (320), and
wherein the method comprises:
inputting the video and the predicted trajectory (710) into the first trained model (310), which is trained to output text describing human behavior, and
obtaining the collision probability by inputting information output from the first trained model (310) into the second trained model (320) for natural language processing.

13. The method of claim 11, comprising:
determining the predicted trajectory (710) for the external object (510) by inputting the video into another trained model (610) trained to predict a movement trajectory of an object.

14. The method of claim 11, comprising:
generating annotation information of the external object (510) by inputting the video into another trained model (610) trained to perform annotation on an object, wherein the annotation information represents a graphical object corresponding to a shape of a movement trajectory of the external object (510), and
determining the predicted trajectory (710) according to the annotation information of the external object (510).

15. The method of claim 11, comprising:
generating a control signal for controlling a speed of the vehicle (210) based on the collision probability.
